# EUROPEAN PATENT APPLICATION

(11) **EP 2 267 632 A1**
(43) Date of publication of application: **29.12.2010**
(21) Application number: 09162634.1
(22) Date of filing: 12.06.2009
(51) Int. Cl.: G06K 7/00, G06K 19/077, G01B 21/16, G01S 1/00, H04B 1/59

(54) **User interaction device**

(71) Applicant: NXP B.V., 5656 AG Eindhoven (NL)
(72) Inventor: Schreuder, Sebastian, 5656 AE Eindhoven (NL)
(74) Representative: Krott, Michel

(57) **Abstract**

A user interaction device for a transponder system is provided, wherein the user interaction device comprises electronic circuitry adapted to communicate with a further device of the transponder system, wherein the communication includes exchanging data indicative of a relative movement between the user interaction device and the further device of the transponder system wherein the data are based on a measurement of the strength of a magnetic field.

## Description

### FIELD OF THE INVENTION

The invention relates to a user interaction device, in particular for a transponder system.

Beyond this, the invention relates to a method of estimating a relative movement of devices of a transponder system.

### BACKGROUND OF THE INVENTION

For unlocking cars and enabling entry into the same several possibilities are known for a person skilled in the art. The possibilities include for example standard keys or some kind of IR or RF transmitter which send a signal to the car which receives the signal and unlocks. Furthermore, keyless entry systems for enabling entry to cars are known. In general these keyless entry systems comprise an active transponder which may be detected if it enters a certain range around the respective car. To activate the passive key several antennas are implemented in the car generating a field which can be detected by the passive key.

However, there may be a need to provide a device for unlocking a car which provides more flexibility and/or more functionality.

### OBJECT AND SUMMARY OF THE INVENTION

It may be an object of the invention to provide a user interaction device, in particular for a transponder system, and to provide a method of estimating a relative movement of devices of a transponder system which may provide more flexibility and/or functionality.

In order to achieve the object defined above, user interaction device, a transponder system, a method of estimating a relative movement of devices of a transponder system, a program element, and a computer readable medium according to the independent claims are provided. Further embodiments are described in the dependent claims.

According to an exemplary aspect a user interaction device for a transponder system is provided, wherein the user interaction device comprises electronic circuitry adapted to communicate with a further device of the transponder system, wherein the communication includes exchanging data indicative of a relative movement between the user interaction device and the further device of the transponder system wherein the data are based on a measurement of the strength of a magnetic field.

In particular, the user interaction device may be a transponder, e.g. an RFID tag, a smart card or the like or even a remote control of any system controllable by a remote control, e.g. of a home entertainment system. That is, the transponder system may be any system controllable by a remote control, like a home entertainment system, television set, a hi-fi system, a video projector or the like. Such a transponder may be an active or a passive transponder as known in the prior art. The further device of the transponder system may be a reader or reading unit of the transponder system. However, it may also be the other way around, i.e. the user interactive device may be the reader while the further device of the transponder system may be the transponder. For example, the user interaction device may be a key for a car or a home or the like. The communication may be wireless or may be via wire or line. The data may in particular relate to different measurements performed at different points in time which may enable the calculation or estimation of the relative movement, e.g. a decrease or increase in distance. The exchanging of the data may be performed by a contactless transmission, wherein the term "contactless transmission" may particularly denote a transmission of a signal, or analog or digital data from a sending unit to a receiving unit, wherein the sending unit and the receiving unit are not directly connected by a connection line, e.g. either an electrically conductive line or a connection line adapted to transmit light. Thus a contactless transmission may be performed by an electromagnetic wave of any suitable frequency, e.g. a radio wave, a microwave, or a wave of infrared light.

According to an exemplary aspect a transponder system is provided comprising a transponder according to an exemplary aspect and a reader according to an exemplary aspect. In particular, the reader may be adapted to be implemented or arranged in a car and the transponder may form a key of a locking system of the car. Alternatively, the transponder system may be a home entertainment system wherein the transponder may be a remote control of the entertainment system and the may be reader may be formed by the television set or hi-fi system.

According to an exemplary aspect a method of estimating a relative movement of devices of a transponder system is provided, wherein the method comprises exchanging data indicative for a measured strength of a magnetic field between two devices of the transponder system, and estimating the relative movement based on the exchanged data.

According to an exemplary aspect a program element is provided, which, when being executed by a processor, is adapted to control or carry out a method according to an exemplary aspect of the invention.

According to an exemplary aspect a computer-readable medium, in which a computer program is stored which, when being executed by a processor, is adapted to control or carry out a method according to an exemplary aspect of the invention.

The term "user interaction device" may particularly denote a device which is usable for a user to interact with another device, e.g. by a wireless communication. Such an interaction may in particular include provision of commands by a user of the user interaction device. These commands may be directed to the user interaction device, e.g. a transponder or RFID tag, or may be directed to the further device of the transponder system, which may be a car, electronic equipment included in the car, e.g. a radio, CD player or any other entertainment units in the car, window actuator, light switch or the like. However, the meaning of the term "interaction" may have to be distinguished from a simple yes/no interaction, i.e. an entry permission, e.g. for a house or a car, which, according to this application, may not fall under the term "interaction".

The term "relative movement" may particularly denote a movement between two objects, e.g. the user interaction device and the further device. It should be noted that this movement may correspond to a change in position and may be calculated or determined by a difference of two measured or determined positions. In particular, such a relative movement may be different to a determination whether a distance between the user interaction device and the further device is below or above a predetermined threshold like it is determined by a proximity sensor, for example.

By providing a user interaction device according to an exemplary aspect it may be possible to provide an additional input path for commands for a user by relative movement of the user interaction device, which additional input path may be easily implemented, since no additional complex sensor elements, like accelerator sensors infrared sensors, may be necessary. This advantage may be given in particular in case the transponder system already includes a magnetic sensor like a coil or similar elements. Furthermore, since data indicative for a relative movement between two devices may be analyzed it may be possible to provide a signal based on gestures performed by a user with the user interaction device. Thus, it may be possible for the user to interact by performing specific gestures or movements which may be sensed based on a changing of the strength of a magnetic field. In particular, it should be noted that the additional input path may be different to a simple button used for an on/off interaction or command. However, the additional input path provided may be switched on/off by using a button, e.g. by pressing a button on or in the user interaction device the user interaction device may be activated so that a subsequent measurement for a relative movement may be feasible. That is, the user interaction device may comprise a switch adapted to activate and/or deactivate the exchanging of the data indicative of a relative movement between the user interaction device and the further device of the transponder system and/or to activate/deactivate a measurement of the strength of a magnetic field.

It may be seen as a gist of an exemplary aspect that a relative movement between two devices, e.g. a transponder and a reader, of a transponder system is measured by measuring the strength of a magnetic field or an electromagnetic field. Afterwards data indicative of the measured strength of the magnetic field may be exchanged. In particular, several movements may be performed and a position difference and/or a movement vector may be calculated or estimated. The provision of such a movement vector may enable the possibility to correlate different movement vectors with different commands, so that with the use of one user interaction device a plurality of commands may be initiated. This feature may enable the generation or provision of position sensitive gesture commands, i.e. different commands may be associated with the same gesture depending on the position the gesture is performed. It should also be mentioned that according to an exemplary aspect no accelerator sensors are used, i.e. the sensing system may be accelerator-sensor-free.

Next, further exemplary embodiments of the user interaction device are described. However, these embodiments also apply to the transponder system, the method of estimating a relative movement of devices of a transponder system, the program element, and the computer readable medium.

According to an exemplary embodiment the user interaction device further comprises a sensor unit adapted to perform a measurement of the strength of the magnetic field. In particular, the sensor element may comprise a single, two, three or a plurality of sensor elements. At least some of the sensor elements may be formed by a coil. For example, the magnetic field may be primarily generated by the further device of the transponder system, e.g. a reader of the transponder system generating a magnetic or electromagnetic field.

According to an exemplary embodiment of the user interaction device the sensor unit comprises three coils which are arranged in different directions. In particular, the three coils may be arranged perpendicular or substantially perpendicular to each other. For example, the three coils may define a Cartesian coordinate system, i.e. one of the coils may define an x-coordinate and a second one may define a y-coordinate while the third one may define a z-coordinate. However, the three coils may be arranged in every relation to each other which ensures that they may be sensitive to different components of the magnetic field which are linear independent from each other, i.e. the main principle of the arrangement of the three coils may be that they may be used to measure the strength of the magnetic field in different directions.

According to an exemplary embodiment the user interaction device further comprises an antenna unit adapted to transmit the data indicative for the relative movement to the further device of the transponder system.

In particular, the antenna unit may be formed by a UHF antenna unit or an antenna unit which is adapted to send or transmit data on every suitable frequency range, e.g. a suitable frequency range may also be infrared radiation or the like.

According to an exemplary embodiment of the user interaction device the data indicative for the measurement of the strength of the magnetic field is the measured strength of the magnetic field itself. Alternatively, the user interaction device may be adapted to perform at least a first analysis or processing of the measured strength of the magnetic field, e.g. the user interaction device may additionally comprise some kind of processing unit, e.g. an CPU, which may be adapted to perform a processing of the measured data, so that the exchanged data indicative for the strength of the magnetic field may be at least pre-processed data and may not correspond to raw measured data. Additionally, the user interaction device may be adapted to perform a further processing of the measured data, e.g. to calculate or estimate the relative movement of the user interaction device with respect to a further device of the transponder system, e.g. a reader, and to derive or estimate a command out of the relative movement, which then may be sent to the further device of the transponder system.

According to an exemplary embodiment the user interaction device further comprises a processing unit wherein the processing unit is adapted to perform an estimation of the relative movement between the user interaction device and a further device of the transponder system based on the exchanged data.

In particular, the estimation may be based on every suitable estimation method, e.g. fuzzy logic or neural network. Alternatively or additionally the estimation may be based on analyzing a change of the measured strength of the magnetic field indicated by the exchanged data. For example, the analyzing may include the analyzing of the change of the measured strength of the magnetic field which measurement may be performed by one or more antennas or coils of the user interaction device, e.g. may be based on ΔH. In this case the analyzing may include a kind of triangulation of the movement. In particular, the user interaction device or the further device of the transponder system may comprise several antennas and the exchanged data indicative of the relative movement may be a triangulation of the device movement between different antennas.

According to an exemplary embodiment of the user interaction device the processing unit is further adapted to generate a signal based on the estimation of the relative movement.

In particular, the signal may form a or may be a command which may be communicated or sent to another device of the transponder system or another system to control the another device. For example, the another device may be an entertainment device or system, a locking system, a HVAC system or a device interacting with a car. In case of an entertainment system the exchanged data may be used to generate commands for volume control, game control, or general entertainment system interaction.

According to an exemplary embodiment of the user interaction device the user interaction device is a transponder of the transponder system.

In particular, the transponder may be an RFID tag, smart card or the like. It may be a passive or an active transponder and/or may include only one or more coils, e.g. 3-D coil unit adapted to measure three independent magnetic field components, e.g. Hₓ, H_{y}, and H_{z}, and/or a sensor unit or sensor element and/or may additionally include a processing unit, storage or memory, and/or one or more antennas.

According to an exemplary embodiment of the user interaction device the user interaction device is a reader of the transponder system. In particular, the reader may be a reader suitable to read RFID tags or smart cards.

According to an exemplary embodiment the user interaction device further comprises one field generation antenna which is adapted to generate a magnetic field.

In particular, the one field generation antenna may be adapted to generate an electro-magnetic field. In this case the transponder may comprise a coil system or unit comprising a 3-D coil, i.e. a system adapted to measure three independent magnetic field components. For example, the coil system may comprise three coils arranged with respect to different axes, e.g. in alignment with Cartesian coordinates. Consequently, it may be possible to estimate the difference in field strength for each coil independently. These differences may correlate to the relative movement of the transponder and the reader with respect to the three directions or axes. This correlation might be using a-priori information on the electromagnetic field, the position of the key and/or expected/possible movements. However, it should be mentioned that it may also be possible that a simple increase or decrease in distance is calculated or estimated and is used to provide or generate a control signal for the user interaction device.

According to an exemplary embodiment the user interaction device further comprises at least two field generation antennas which are adapted to generate a magnetic field.

In particular, the field generation antennas may be adapted to generate each a magnetic or an electro-magnetic field. In this case the transponder may comprise a coil system or unit comprising a 3-D coil, i.e. a system adapted to measure three independent magnetic field components. For example, the coil system may comprise three coils arranged with respect to different axes, e.g. in alignment with Cartesian coordinates. Consequently, it may be possible to estimate the difference in field strength for each coil independently, i.e. Hₓ, H_{y} and H_{z}. These differences may correlate to the relative movement of the transponder and the reader with respect to the three directions or axes. With more than two field generation antennas it may also be possible to estimate the relative movement based on the value of H, i.e. the combined Hₓ, H_{y} and H_{z}.

Summarizing an exemplary aspect may be seen in providing a transponder system for enabling an unlocking and/or other commands, wherein the transponder system comprises a transponder or key and a reader or reading unit. The reading unit may comprise one or a plurality of antennas, e.g. three antennas, which are adapted to generate a magnetic or electro-magnetic field. The transponder may comprise one or a plurality of sensor elements, e.g. coils, which may be arranged in different directions, i.e. the axes of the coils may form an angle with respect to each other, so that the strength of the magnetic field may be measured in three dimensions, e.g. Hₓ, H_{y}, and H_{z} may be measured. From this information or data the position of the transponder with respect to the antenna or antennas of the reader unit may be triangulated. Additionally, the measurement and consequently the triangulation may be performed several times in a relatively short time interval. For example, a measurement may be performed every 1 millisecond to every 200 milliseconds, e.g. every 20 milliseconds. By comparing the triangulated position of the transponder with respect to the reader, i.e. the car, for subsequent measurements the relative movement may be estimated or calculated. Each movement may be associated with a user interaction or command, e.g. with a command for an entertainment system in the car. Thus, a motion sensitive or motion based interaction between a user and a car may be enabled possibly leading to a flexible entry or unlocking system. Additionally, the associated commands may depend on the position of the transponder (key) with respect to the reader (car). For example, the same movement or the same estimated motion vector may be associated with a first command, e.g. unlocking, in case the motion is performed outside of the car, while it may be associated with a second command, e.g. starting the car, in case the same motion is performed inside the car. Thus, the flexibility may be improved even further. It should be noted that translatory and/or rotational movements may be used for defining or recognizing gestures. That is, six parameters may be used or measured to improve the user interaction device, i.e. three translatory degrees of freedom and three rotational degrees of freedom. Furthermore, it should be noted that beside motion or movement vectors of course also velocities and/or accelerations of the relative movement may be determined and used to generate or determine commands. These velocities and/or accelerations may be determined based on the motion vector, e.g. by relating one movement vector at one point in time to other movement vectors at other points in time. That is, by determining a plurality of motion vectors additional parameter may be achievable which may be used to improve the user interaction device.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered to be disclosed within this application.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 schematically illustrates a passive keyless entry system.
Fig. 2 schematically illustrates the passive keyless entry system of Fig. 1 in more detail.
Fig. 3 schematically illustrates an example of movement vector calculation.
Fig. 4 schematically illustrates a transponder system.

### DESCRIPTION OF EMBODIMENTS

The illustration in the drawing is schematically. In different drawings, similar or identical elements are provided with similar or identical reference signs.

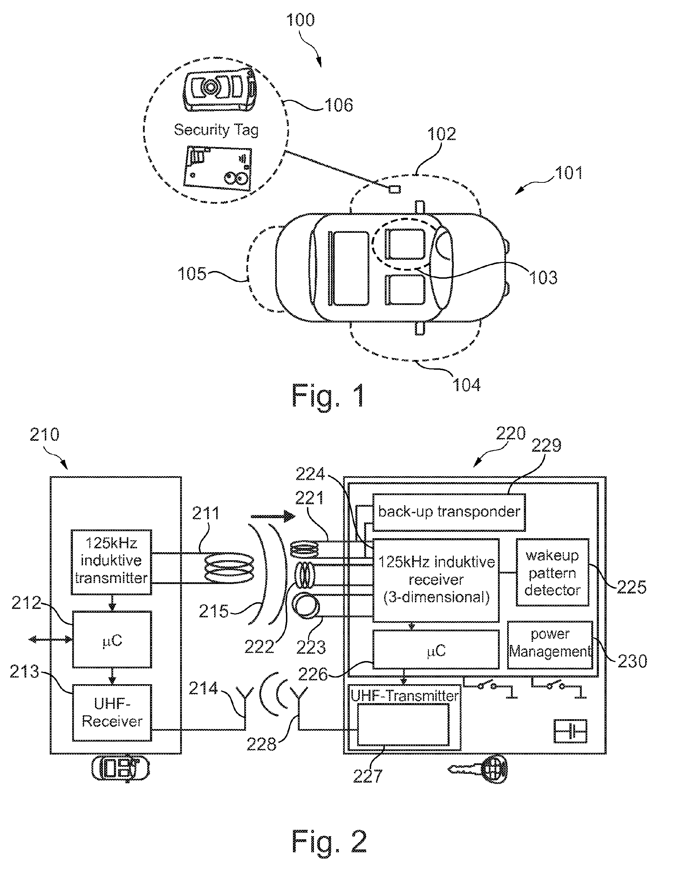

**Fig. 1** schematically shows a passive keyless entry system 100 in which a user interaction device or transponder system according to an exemplary embodiment may be implemented. According to Fig. 1 a reader or reading unit is implemented in a car 101. The reader comprises several field antennas, e.g. 2 to 10, which generate a field, e.g. a magnetic field, which is schematically indicated by the areas 102, 103, 104, and 105 in Fig. 1. However, more field antennas may also be used, e.g. in case an improved coverage is intended. The field antennas may be arranged at different positions in an alternating way. Each antenna may be associated with a specific area or detection range, e.g. field antenna 102 may define a driver door detection range, field antenna 103 may define a driver interior detection range, field antenna 104 may define a passenger door detection range, and field antenna 105 may define a trunk area detection range. For example, the antennas may be low frequency (LF) transmitter antennas, e.g. emitting at a frequency between 10 kHz and 500 kHz, particularly at about 125 kHz.

Furthermore, Fig. 1 shows a car key 106 comprising a transponder, e.g. an RFID tag, a smart card, security tag, or the like. The car key comprises electronic circuitry, e.g. a microcontroller (not shown) which is switched on or wakes up on reception or detection of the field generated by the field antennas, which may form signals which can be detected by the car key. In particular, the car key may measure the field strength of the field(s) generated by the field antenna(s). In case the field antennas generate electromagnetic or magnetic fields, the car key may comprise three coils which are sensitive for electromagnetic or magnetic fields having different directions or orientations. For example, the directions of the coils may form a Cartesian coordinate system, i.e. one coil may be sensitive in particular for a magnetic field in an x-direction, a second coil may be sensitive in particular for a magnetic field in a y-direction, and a third coil may be sensitive in particular for a magnetic field in a z-direction. After the measurements data indicative for the results of the measurement of the field strength is sent to the car, i.e. is exchanged between the car key and the car, e.g. the reader unit(s) in the car. The The communication or exchange may be performed by using an RF link. The exchanged data may be the measured field strength itself or may be data derived from these measurements by performing some pre-processing in the transponder, e.g. in some circuitry or processing unit of the car key. In particular, from these field strength measurements a position calculation is performed, i.e. the current relative position of the car key with respect to the car may be calculated.

Preferably, the measurement of the field strengths is performed a plurality of times, e.g. every 1 to 200 milliseconds, preferably every 20 milliseconds. Thus, a sequence of positions may be calculated or determined forming a relative movement between the two units. The relative movement between the two units may be used to define movement paths or gestures which may be associated with different commands.

It should be noted that by using at least three field antennas the position of the transponder/key may be triangulated in a simple and efficient way.

With reference to **Fig. 2** the transponder system is described in more detail. In particular, on the left side a reading unit 210 is depicted comprising a field antenna 211, e.g. a 125 kHz inductive transmitter, which generates a magnetic field indicated by the lines 215. For clarity reasons only one field antenna is depicted in Fig. 2, however a greater number of antennas may be used. Furthermore, the reading unit comprises a microcontroller 212 which is connected to the field antenna and is further connected to a receiving unit, e.g. an UHF receiver 213, having a receiving antenna 214.

On the right side of Fig. 2 a transponder, e.g. a car key 220, is schematically depicted. The car key 220 comprises a plurality of coils 221, 222, and 223 which are arranged in different directions, i.e. in a way to be sensitive to different components of the magnetic field generated by the field antenna(s) 211. The coils are connected to an inductive receiver 224, e.g. a three dimensional 125 kHz inductive receiver. The receiver unit further comprises some electronic components, e.g. a wakeup pattern detector 225 which is adapted to detect, determine or to recognise a wakeup pattern sent by the reading unit 210. Upon receiving of the wakeup pattern the transponder is powered up. Additionally, the transponder comprises a microcontroller 226 which is connected to the receiver unit 224 and to a UHF transmitter 227 comprising an antenna 228. Other electronic components of the transponder may be a back-up transponder 229 connected to one or more receiving antennas and a power management unit 230 which may be adapted to perform the power management of the transponder or the electronic components of the car key.

Upon detecting a wakeup pattern the car key may perform a measurement of the magnetic field generated by the field antenna(s) of the reading unit. Such a measurement may take about 20 microseconds and may be called received signal strength indicator (RSSI) measurement. Afterwards the key may transmit the measured values of the field strength to the car or the reading unit via the RF link, e.g. the UHF link schematically depicted in Fig. 2. Using the results of one or more such measurements the position of a car key relative to the car or vehicle may be calculated.

In case several measurements and calculations of relative positions are performed sequentially it may be possible to estimate or calculate a relative movement from which gestures performed by a user, e.g. the person holding and moving the key, can be analyzed. These gestures may be associated with commands which may be generated and may provide an interaction of a user with a user interface which may be used to control equipment or functions of the car. In particular, the relative movement may be measured by conducting several RSSI measurements in a short timeframe, calculating the relative positions at the points in time of the measurements, and/or calculating or estimating a difference vector of the movement between the relative positions. For example, the field strength difference may be translated to a movement vector by an estimator system, e.g. based on fuzzy logic and/or neural network.

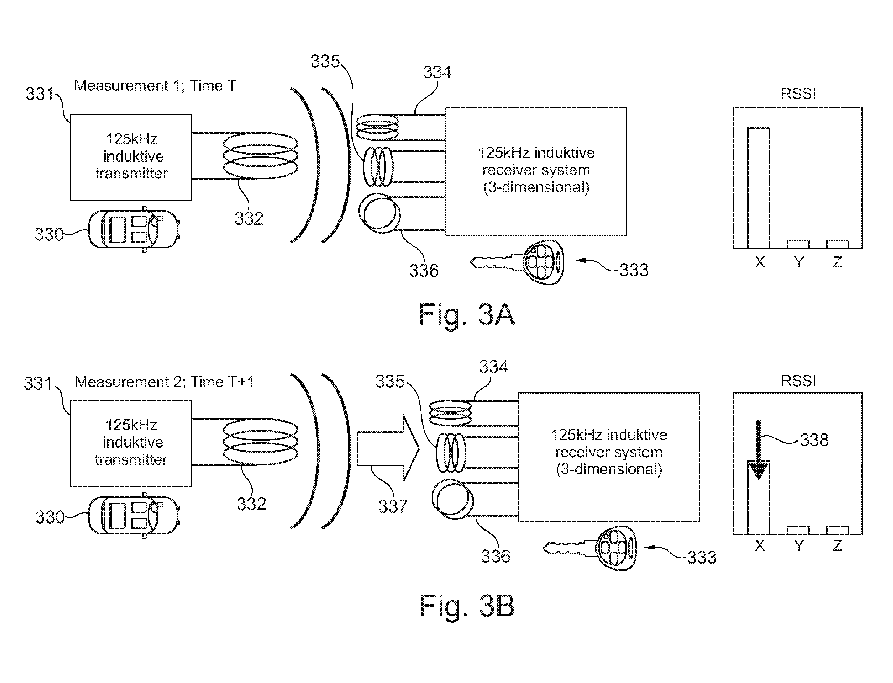

**Fig. 3** shows a simplified example of a one dimensional relative movement. The upper portion (Fig. 3A) of Fig. 3 shows the relative position of a car 330 including an inductive transmitter 331 comprising a field antenna 332, and a car key 333 at a first point in time T. The field antenna 332 generates a magnetic field which is sensed by a coil arrangement of three coils 334, 335 and 336 of a car key 332. On the right side the strengths of the magnetic field are schematically depicted for the x-direction, the y-direction and the z-direction, e.g. corresponding to the schematically depicted coils.

The lower portion (Fig. 3B) of Fig. 3 shows the relative position of the car 330 and the car key 332 at a second point in time T+x. As indicated by the arrow 337 the car key 332 is moved to the right in the Fig. 3B with respect to Fig. 3A. On the right side the strengths of the magnetic field are schematically depicted for the x-direction, the y-direction and the z-direction again. As indicated by the arrow 338 the strength of the magnetic field in x-direction is decreased, while the other strengths remain mostly unchanged. Thus, the movement depicted in Fig. 3 corresponds to a movement in the x-direction. In other words, the case depicted in Fig. 3 corresponds to a one dimensional movement while in reality typically a three typically a three dimensional movement including three translatory degrees of freedom and three rotational degrees of freedom is performed, so that in total six parameters may be calculated or estimated. It should be noted that of course even in the case of a one dimensional movement the measured strengths of all three coils may change.

The calculation or estimation is preferably performed by the system or unit handling the user interface system, e.g. the car handling an entertainment system. To this end an RF receiver that receives the RSSI values measured by the key is connected to the user interface system, e.g. by feeding the received RF data to a CAN-bus

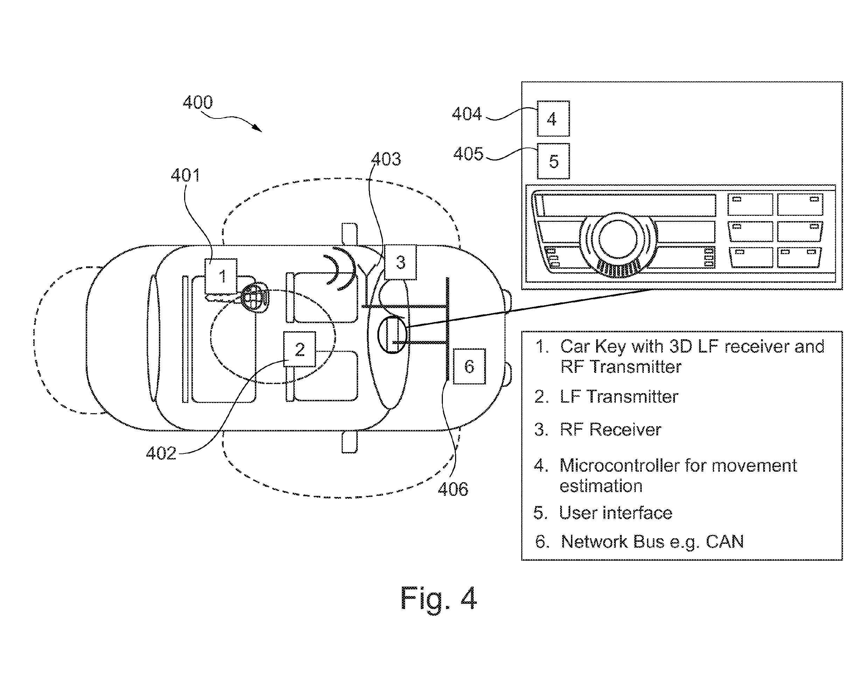

**Fig. 4** schematically illustrates a transponder system 400 comprising several components. In particular, the transponder system 400 comprises a transponder unit 401, e.g. a car key, including a three dimensional LF receiver and an RF transmitter, one or more LF transmitter 402 adapted to generate a magnetic field, an RF receiver 403 adapted to receive data indicative for a relative movement of the transponder with respect to the LF transmitter, and sent by the transponder, a microcontroller 404 connected to the RF receiver 403 and adapted to perform an estimation of the relative movement, a user interface 405, e.g. an interface which can be used by a user to control an entertainment equipment in the car, and a network bus 406.

In operation the transponder system of Fig. 4 works as follows: The car key 401 measures the strength of one or more LF fields generated by the LF transmitters of the transponder system arranged in the car and sends data indicative for the measured strengths to the car via RF. In particular, it should be noted that antennas generating the LF fields may be active during different points in time, e.g. a first antenna may generate a first LF field at a first point in time, a second antenna may generate a second LF field at a second point in time and so on. Such a measurement is performed at least two times so that a set of at least two positions can be calculated by the transponder system. In particular, the sent data is transmitted to the microcontroller 404 via bus 406. From the difference of the measured field strengths a movement vector may be estimated by the microcontroller 404 which may then form an input for a user interface or entertainment system 405. In particular, the estimation may be used to generate a command specific to the user interface, e.g. a control command for a volume command of a CD-player or the like. It should also be noted that the specific command generated based on the relative movement may also depend on the current position of the car key (transponder). For example, a movement or gesture performed outside of the car may lead to another command than the same movement or gesture performed inside of the car. That is, a control command may be generated based on the relative movement and/or the relative position. This feature may enable the generation or provision of position sensitive gesture commands. Examples for possible commands relating to an entertainment system may be a browsing function for browsing through a list of music albums, e.g. a relative movement to the right may induce the jumping to the next album in the list, a relative movement to the left may induce the jumping to the former album in the list. Additionally it may be possible to perform some control commands even from the rear seat of a car, e.g. the upward moving of the key may turn up the volume.

According to an exemplary aspect no or only a few additional hardware components may be necessary compared to a typical car having a keyless entry / go system, since these systems already comprises most of the components. Sometimes a connection or link between the RF receiver and the user interface may lack, which however can be typically implemented at little cost and effort. Thus, an advantage of a transponder system according to an exemplary aspect may be that additional paths for interacting with a user interface or car entertainment system may be provided without adding hardware costs. That is, the additional interactions paths may be implemented mainly or totally by amending the software. Thus, it may also be possible to reduce buttons required for interaction, since these buttons are replaced by a fashionable way of interacting.

Summarizing a system for a motion-based user control interface is provided according to an exemplary aspect, wherein the commands of the interface may be based on a difference vector of at least two field strength measurements. The measurements may be done by using a measurement of one field antenna generating a magnetic field and implemented in a car, for example. It may also be done by using several field antennas so that a more precise movement measurement may be performable. The decision whether one or more field antenna(s) are used may be based on the time resolution which can be provided, because a multi field antenna system may also multiply the required RSSI measurement time. The difference vector may be calculated, e.g. in case the vector is unambiguous, or may be estimated, e.g. in case the vector is ambiguous. The estimation may be based on statistical, fuzzy logic and/or neural network algorithms, and may take into account typical movement pattern of a human arm.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A user interaction device (101, 106) for a transponder system (100), the user interaction device (101, 106) comprising:
electronic circuitry adapted to communicate with a further device (106, 101) of the transponder system (100), wherein the communication includes exchanging data indicative of a relative movement between the user interaction device (101, 106) and the further device (106, 101) of the transponder system (100) wherein the data are based on a measurement of the strength of a magnetic field.

2. The user interaction device (101, 106) according to claim 1, further comprising:
a sensor unit (221, 222, 223, 224) adapted to perform a measurement of the strength of the magnetic field.

3. The user interaction device (101, 106) according to claim 2,
wherein the sensor unit (221, 222, 223) comprises three coils which are arranged in different directions.

4. The user interaction device (101, 106) according to claim 1, further comprising:
an antenna unit (228) adapted to transmit the data indicative for the relative movement to the further device (106, 101) of the transponder system (100).

5. The user interaction device (101, 106) according to claim 1,
wherein the data indicative for the measurement of the strength of the magnetic field is the measured strength of the magnetic field.

6. The user interaction device (101, 106) according to claim 1, further comprising:
a processing unit (226) wherein the processing unit (226) is adapted to perform an estimation of the relative movement between the user interaction device (101, 106) and a further device (106, 101) of the transponder system (100) based on the exchanged data.

7. The user interaction device (101, 106) according to claim 6,
wherein the processing unit (226) is further adapted to generate a signal based on the estimation of the relative movement.

8. The user interaction device (101) according to claim 1,
wherein the user interaction device (101) is a transponder of the transponder system (100).

9. The user interaction device (106) according to claim 1,
wherein the user interaction device (106) is a reader of the transponder system (100).

10. The user interaction device (109) according to claim 9, further comprising:
one field generation antenna (211) which is adapted to generate a magnetic field.

11. The user interaction device (109) according to claim 9, further comprising:
at least two field generation antennas (211) which are adapted to generate a magnetic field.

12. A transponder system (100) comprising:
a transponder (101) according to claim 8, and
a reader (106) according to claim 9.

13. A method of estimating a relative movement of devices of a transponder system, the method comprising:
exchanging data indicative for a measured strength of a magnetic field between two devices of the transponder system,
estimating the relative movement based on the exchanged data.

14. The method according to claim 13, further comprising:
generating a command based on the estimated relative movement.

## Amended claims

### Amended claims in accordance with Rule 137(2) EPC.

**1.** A user interaction device (101, 106) for a transponder system (100), the user interaction device (101, 106) comprising:
electronic circuitry adapted to communicate with a further device (106, 101) of the transponder system (100), wherein the communication includes exchanging data indicative of a relative movement between the user interaction device (101, 106) and the further device (106, 101) of the transponder system (100) wherein the data are based on a measurement of the strength of a magnetic field, and
a processing unit (226) wherein the processing unit (226) is adapted to perform an estimation of the relative movement between the user interaction device (101, 106) and a further device (106, 101) of the transponder system (100) based on the exchanged data, and
wherein the processing unit (226) is further adapted to generate a signal based on the estimation of the relative movement, wherein the signal forms a gesture command.

**2.** The user interaction device (101, 106) according to claim 1, further comprising:
a sensor unit (221, 222, 223, 224) adapted to perform a measurement of the strength of the magnetic field.

**3.** The user interaction device (101, 106) according to claim 2,
wherein the sensor unit (221, 222, 223) comprises three coils which are arranged in different directions.

**4.** The user interaction device (101, 106) according to claim 1, further comprising:
an antenna unit (228) adapted to transmit the data indicative for the relative movement to the further device (106, 101) of the transponder system (100).

**5.** The user interaction device (101, 106) according to claim 1,
wherein the data indicative for the measurement of the strength of the magnetic field is the measured strength of the magnetic field.

**6.** The user interaction device (101) according to claim 1,
wherein the user interaction device (101) is a transponder of the transponder system (100).

**7.** The user interaction device (106) according to claim 1,
wherein the user interaction device (106) is a reader of the transponder system (100).

**8.** The user interaction device (109) according to claim 7, further comprising:
one field generation antenna (211) which is adapted to generate a magnetic field.

**9.** The user interaction device (109) according to claim 7, further comprising:
at least two field generation antennas (211) which are adapted to generate a magnetic field.

**10.** A transponder system (100) comprising:
a transponder (101) according to claim 6, and
a reader (106) according to claim 7.

**11.** A method of estimating a relative movement of devices of a transponder system, the method comprising:
exchanging data indicative for a measured strength of a magnetic field between two devices of the transponder system,
estimating the relative movement based on the exchanged data, and
generating of a signal based on the estimation of the relative movement, wherein the signal forms a gesture command.

**12.** The method according to claim 11, further comprising:
generating a command based on the estimated relative movement.
